Europäisches Patentamt

European Patent Office

Office européen des brevets

(19)

(11) Veröffentlichungsnummer: **0 095 017**
**A2**

(12) # EUROPÄISCHE PATENTANMELDUNG

(21) Anmeldenummer: **83102251.2**

(22) Anmeldetag: **08.03.83**

(51) Int. Cl.³: **G 01 B 3/00**

---

(30) Priorität: **21.05.82 DE 3219083**

(43) Veröffentlichungstag der Anmeldung:
**30.11.83 Patentblatt 83/48**

(84) Benannte Vertragsstaaten:
**AT CH FR GB IT LI NL SE**

(71) Anmelder: **Dr. Johannes Heidenhain GmbH**
**Nansenstrasse 17**
**D-8225 Traunreut(DE)**

(72) Erfinder: **Nelle, Günther, Dr.-Ing.**
**Eichenweg 12**
**D-8221 Bergen(DE)**

---

(54) **Längenmesseinrichtung.**

(57) Diese Längenmeßeinrichtung weist ein Gehäuse (1) auf, das einen Maßstab und eine Abtasteinheit abschirmt. Das Gehäuse (1) ist über Befestigungselemente an einem der zu messenden Objekte (21) befestigt. Eines der Befestigungselemente verbindet direkt das Gehäuse (1) mit dem zu messenden Objekt (21), während bei dem anderen Befestigungselement (10) ein Ausgleichselement (9) in Form von in Ebenen etwa senkrecht zur Meßrichtung verlaufenden mäanderförmigen Schlitzen vorgesehen ist, so daß das Gehäuse (1) gegenüber diesem Befestigungselement (10) einen translatorischen Freiheitsgrad in Längsrichtung des Gehäuses (1) aufweist.

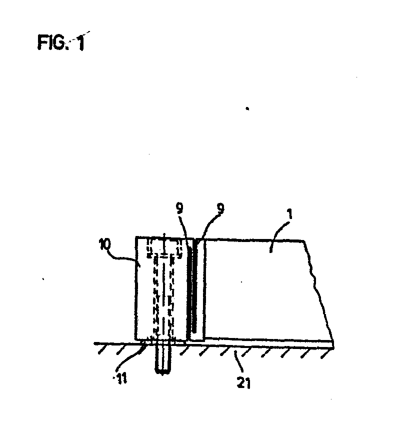

FIG. 1

EP 0 095 017 A2

- 1 -

DR. JOHANNES HEIDENHAIN GMBH     1. März 1983

Längenmeßeinrichtung
===========================

Die Erfindung betrifft eine Längenmeßeinrichtung gemäß dem Oberbegriff des Anspruches 1.

Gemäß der DE-OS 28 53 771 ist der Träger des Maßstabs an einem Ende direkt über ein erstes Befestigungselement mit einem Maschinenteil verbunden, während am anderen Ende der Träger über ein Ausgleichselement mit einem zweiten Befestigungselement verbunden ist, das seinerseits ebenfalls am Maschinenteil befestigt ist. Durch dieses Ausgleichselement besitzt der Träger am anderen Ende einen translatorischen Freiheitsgrad in seiner Längsrichtung.

Der Erfindung liegt die Aufgabe zugrunde, bei einer derartigen Längenmeßeinrichtung den Bedarf an mechanischen Elementen zur Lagerung des Trägerendes mit einem translatorischen Freiheitsgrad zu reduzieren.

- 2 -

Diese Aufgabe wird erfindungsgemäß durch das kennzeichnende Merkmal des Anspruches 1 gelöst.

Die mit der Erfindung erzielten Vorteile bestehen insbesondere darin, daß das Ausgleichselement als integrierender Bestandteil des Befestigungselements ausgebildet ist, so daß sich ein konstruktiv- und fertigungstechnisch einfacherer und kostengünstigerer Aufbau einer derartigen Längenmeßeinrichtung ergibt; desgleichen wird die Lagerhaltung vereinfacht.

Die Zeichnung zeigt ein Ausführungsbeispiel der Erfindung.

Das Gehäuse 1 einer gekapselten Längenmeßeinrichtung als Träger eines Maßstabs ist mittels Befestigungselemente an einem zu messenden Objekt 21 befestigt. Eines der Befestigungselemente, das in der Zeichnung mit 10 bezeichnet ist, ist als Ausgleichselement ausgebildet. Das Ausgleichselement 9 ist durch senkrecht zur Meßrichtung verlaufende mäanderförmige Schlitze im Befestigungselement 10 gebildet. Dieses Ausgleichselement 9 ermöglicht dem Gehäuse 1 einen translatorischen Freiheitsgrad in seiner Längsrichtung; durch diese bewegliche Anordnung des Gehäuses 1 können keine wesentlichen, durch thermische Längenänderungen hervorgerufene Längskräfte auftreten, so daß die Meßgenauigkeit nicht beeinträchtigt wird. Das dem Befestigungselement 10 am Gehäuse 1 gegenüberliegende Befestigungselement (nicht dargestellt) ist direkt d. h. ohne Zwischenschaltung eines Ausgleichselements mit dem Gehäuse 1 verbunden. Das mit mäanderförmigen Schlitzen 9 versehene Befestigungselement 10

- 3 -

und/oder das diesem gegenüberliegende Befestigungselement ist über ein Kugelgelenk 11 mit dem zu
messenden Objekt 21 verbunden.

Da das Befestigungselement 10 mit dem Ausgleichselement 9 eine geringe Winkelbewegung des Gehäuses
1 in einer Ebene parallel zur Meßrichtung und senkrecht zur Anbaufläche am Objekt 21 zuläßt, kann
das Kugelgelenk 11 auch entfallen.

- 4 -

Ansprüche
=========

1. Längenmeßeinrichtung zum Messen oder Einstellen der Relativlage zweier Objekte, insbesondere gekapselte Meßeinrichtung, mit einem an einem Träger angeordneten Maßstab und einer die Teilung des Maßstabs abtastenden Abtasteinheit, bei der der Träger des Maßstabs an beiden Enden über Befestigungselemente mit einem der zu messenden Objekte verbunden ist, wobei der Träger am einen Ende direkt mit einem ersten Befestigungselement verbunden ist, während zwischen dem anderen Ende des Trägers und einem zweiten Befestigungselement ein Ausgleichselement derart angeordnet ist, daß das andere Ende des Trägers mit einem translatorischen Freiheitsgrad in Längsrichtung des Trägers gelagert ist, dadurch gekennzeichnet, daß zur Erzielung des translatorischen Freiheitsgrades das Ausgleichselement (9) in Form von in Ebenen etwa senkrecht zur Meßrichtung verlaufenden mäanderförmigen Schlitzen im Befestigungselement (10) gebildet ist.

2. Längenmeßeinrichtung nach Anspruch 1, dadurch gekennzeichnet, daß das mit mäanderförmigen Schlitzen (9) versehene Befestigungselement (10) und/oder das diesem gegenüberliegende Befestigungselement über ein Kugelgelenk (11) mit dem zu messenden Objekt (21) verbunden ist.